# EUROPÄISCHE PATENTANMELDUNG

(11) **EP 1 566 095 A1**
(43) Veröffentlichungstag der Anmeldung: **24.08.2005**
(21) Anmeldenummer: 05003581.5
(22) Anmeldetag: 18.02.2005
(51) Int. Cl.: A01G 13/10

(54) **Vorrichtung zum Schutz von Bäumen**

(30) Priorität: 21.02.2004 AT 2792004
(71) Anmelder: Witt-Dörring, Rudolf, 2320 Zwölfaxing (AT)
(72) Erfinder: Witt-Dörring, Rudolf, 2320 Zwölfaxing (AT)

(57) **Zusammenfassung**

Vorrichtung zum Schutz von Bäumen gegen das Aufklettern von Schädlingen wie beispielsweise Ameisen und Raupen, die um einen Baum gewickelt ist und durch Aufbiegen des unteren Teiles ein nach oben offenes Gefäß bildet (5), das, um das Aufklettern von Schädlingen zu verhindern, mit Flüssigkeit (8) befüllt ist. Die den Baum (7) schützende Rinne wird aus einem elastischen glatten Band (1) gebildet, dass ganz oder teilweise adhäsiv (3)ist. Dieses Band ist vor dem Aufbiegen ein oder mehrmals um zu schützende Bäume gewickelt. Durch die adhäsive Eigenschaft des Bandes wird einerseits die Rinne für die Flüssigkeit gedichtet und andererseits das Band am Baumstamm befestigt. Das elastische Band kann durch in Querrichtung angeordnete Metall- oder Kunststoffrippen (2) verstärkt sein. Dadurch wird verhindert, dass sich das elastische Band am oberen Rand durch das Baumwachstum zusammenzieht. Das elastische Band ist in der Art eines Klebebandes auf einer Rolle aufgerollt. Der obere Teil des elastische Bandes ist zum Schutz gegen Verunreinigungen zusätzlich nach unten klappbar.

## Beschreibung

Die Erfindung betrifft eine Vorrichtung zum Schutz von Bäumen gegen das Aufklettern von Schädlingen wie beispielsweise Ameisen und Raupen, die um einen Baum gewickelt ist und durch aufbiegen des unteren Teiles ein nach oben offenes Gefäß bildet das, um das Aufklettern von Schädlingen zu verhindern mit Flüssigkeit befüllt ist.

Ähnliche Vorrichtungen wurden bereits zum Patent vorgeschlagen. Als Beispiel sind hier FR 2599214 und US 4800676 genannt. Bisher wurden zu diesem Zweck mit Wasser oder anderen Flüssigkeiten befüllbare runde Behälter um den Baum gelegt und an der Innenseite mit dem Baum dicht verbunden. Dadurch konnten die Ameisen und Raupen nicht mehr ohne Durchquerung des Wassers auf den Baum gelangen.

Die Schwierigkeit die sich bei dieser Methode ergibt ist, daß diese Behälter an den Baumdurchmesser angepasst sein müssen. Es muß für jeden Baumdurchmesser eine eigene Gefaßgröße hergestellt werden. Das Baumwachstum bereitet den Gefäßen ebenso Probleme die nur dadurch zu lösen sind daß man die Gefäße von Zeit zu Zeit austauscht. Außerdem ist es nicht leicht die Wasserringe abzudichten, da die Gefäße im allgemeinen aus zwei Halbschalen bestehen. Die Montage, Lagerung und Transport sind umständlich und aufwendig.

Manche dieser Einrichtungen wie die der Patentanmeldung DE 3841328 A1 sind durch eine Ziehharmonika Form des Gefäßes nicht sehr stabil. Die Montage erweist sich in der Praxis als schwierig. Bei dieser Ausführung wird ein hannonikaartig gefalteter Metallstreifen um den Baum gelegt und nach oben gezogen. Die mit Wasser gefüllte Rinne ist entweder nicht sehr tief, wodurch sie schnell austrocknet, oder die Rinne ist schwer zu reinigen und dadurch in der Praxis nicht gut zu verwenden.

Die zugrundeliegende Aufgabe besteht darin eine Vorrichtung anzugeben, die einfach anzuwenden ist und den Baum sicher vor aufklettemden Schädlingen schützt. Der Gegenstand der Erfindung benötigt zur Befestigung keine anderen Teile wie Schnüre oder Klebestreifen da er selbstklebend und selbstabdichtend ist. Insbesondere Schnüre haben den Nachteil, dass sie gerne vergessen werden und der zu schützende Baum nach ein paar Jahrenarge Verletzungen in Form von Einkerbungen erhält.
Adhäsion
Die Aufgabe wird dadurch gelöst, dass die den Baum schützende Rinne aus einem elastischen glatten Band gebildet ist, dass ganz oder teilweise adhäsiv ist und dieses Eiand vor dem aufbiegen ein oder mehrmals um zu schützende Bäume gewickelt ist. Durch diese Konstruktion wird das Aufbringen eines Schutzringes extrem einfach und kostengunstig. Es sind zum aufbringen eines Schutzringes keine zusätzlichen Hilfsmittel wie beispielsweise Schnüre oder doppelseitige Klebebänder erforderlich. Das elastische Band wird um den Baum gewickelt, aufgebogen und mit Flüssigkeit befüllt. Durch die adhesive Eigenschaft des Bandes wird die Rinne einerseits am Baumstamm befestigt und andererseits auch wasserdicht. Dabei ist es nicht entscheidend, ob die Folie ein oder zweiseitig adhasiv beschichtet ist oder lediglich adhäsive Querstreifen aufgebracht werden.
Die Breite des Bandes sowie die Biegesteifigkeit und Längselastizität hängen vom Durchmesser des zu schützenden Baumes ab.

Weitere vorteilhafte Ausgestaltungen sind in den Unteransprüchen gegeben. Das elastische Band kann durch in Querrichtung angeordnete Metall- oder Kunststoffrippen verstärkt sein. Dadurch ergibt sich eine Vereinfachung und Verbilligung der Herstellung des Bandes mit der gewünschten Biegesteifigkeit in Querrichtung. Die Versteifung bewirbt, dass sich die Rinne bei Zunahme des Baumumfanges oben nicht verengt, die Vorrichtung in Längsrichtung jedoch gut dehnbar bleibt.
Das elastische Band kann in der Art eines Klebebandes auf einer Rolle aufgerollt sein. Dadurch wird die Anwendung weiter vereinfacht und die adhäsive Eigenschaft des Bandes vor Austrocknung und vorzeitiger Alterung geschützt. An der Verpackung kann, so wie bei herkömmlichen Adhäsionäklebestreifen, der Einfachheit halber eine Schneidevorrichtug oder Abrisskante vorgesehen werden.
Das elastische Band kann Zum Schutz gegen Verunreinigungen von oben zusätzlich nach untern klappbar sein. Das nach unten biegen des oberen Randes der Folie schützt den ringförmigen Behälter einerseits von herabfallender Verunreinigung in Form von Laub und Rinde und bildet andererseits einen Schutz gegen das Austrinken des Wassers durch Vögel. Zum Reinigen oder Nachfüllen der Rinne lässt sich der obere Rand jederzeit wieder aufbiegen.

Die beigefügten Zeichnungen stellen ein Ausführungsbeispiel dar. Es zeigt:

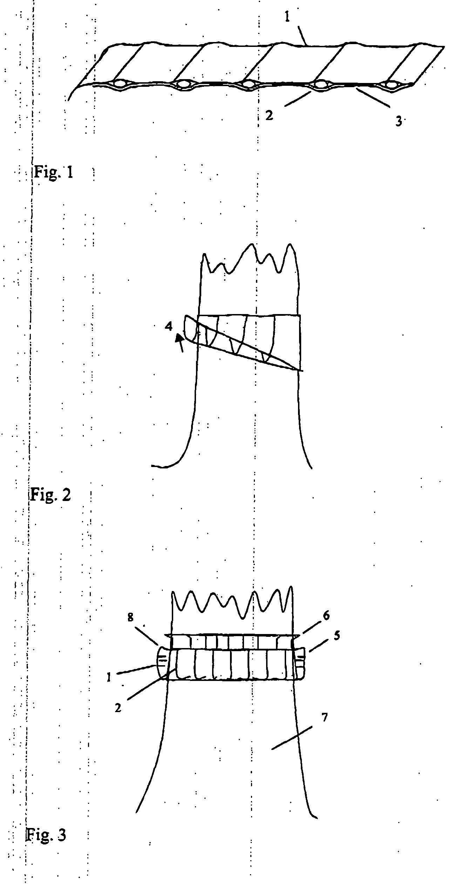

Fig. 1 Die Folie
Fig. 2 Die Folie um den Baum gelegt wird aufgebogen
Fig. 3 Die fertige Vorrichtung mit Flüssigkeit befüllt.

Die Folie wird in der Art eines Klebestreifens aufgerollt. Die Anwendung ist dadurch ähnlich der eines breiten Klebebandes, das um einen Baum (7) gewickelt ist, bzw. einer Stretchfolie zum Stabileren von Paletten.

Je nach Baumdurchmesser wird das elastische Band (1) ein oder mehrmals um den Baum gewickelt und abgeschnitten bzw. an der Abrisskante der Verpackung abgerissen. Bei diesem Vorgang wird die Folie automatisch abgedichtet. Möglicherweise muss aber die Dichtung noch kontrolliert und mit der Hand an manchen Stellen nachgedrückt weiden. Die Stäbchen (2) in der Folie beziehungsweise die glatte Folie wird nach oben (4), bzw. für den Laübschutz (6) nach unten, gebogen. Ist die Folie dann mit der entsprechenden Flüssigkeit gefüllt ist der Baum von lästigen Quälgeisterü geschützt.

Die erfindungsgemäße Folie kann natürlich auch an glatten Flächen angeklebt und aufgebogen werden. Dadurch kann den Ameisen oder Raupen auch das Aufklettern an Hauswänden z.B. bei Spalierobst erschwert werden.

## Patentansprüche

1. Vorrichtung zum Schutz von Bäumen gegen das Aufklettern von Schädlingen wie beispielsweise Ameisen und Raupen, die um einen Baum gewickelt ist und durch Aufbiegen des unteren Teiles ein nach oben offenes Gefäß bildet, das, um das Aufklettern von Schädlingen zu verhindern, mit Flüssigkeit befüllt ist, **dadurch gekennzeichnet, dass** die den Baum schützende Rinne aus einem elastischen glatten Band (1) gebildet ist, dass ganz oder teiliuveise adhäsiv ist (3) und dieses Band vor dem Aufbiegen ein oder mehrmals um zu Schützende Bäume (7) gewickelt ist.
2.) Vorrichtung nach Anspruch 1, **dadurch gekennzeichnet, dass** das elastische Band durch in Querrichtung angeordnete Metall-oder Kunststoffrippen verstärkt ist.
3.) Vorrichtung nach Anspruch 1 und 2 **dadurch gekennzeichnet, dass** das elastische Band in der Art eines Klebebandes auf einer Rolle aufgerollt ist.
4.) Vorrichtung nach Anspruch, 1 bis 3 **dadurch gekennzeichnet, dass** das elastische Band zum Schutz gegen Verunreinigungen von oben zusätzlich klappbar ist.
